Europäisches Patentamt
European Patent Office
Office européen des brevets

(19)

(11) Veröffentlichungsnummer: **0 219 741**
**A2**

(12) # EUROPÄISCHE PATENTANMELDUNG

(21) Anmeldenummer: 86113629.9

(22) Anmeldetag: 02.10.86

(51) Int. Cl.⁴: **C 09 B 62/51**
C 09 B 67/24, D 06 P 3/66

(30) Priorität: 12.10.85 DE 3536477
19.10.85 DE 3537260

(43) Veröffentlichungstag der Anmeldung: 29.04.87 Patentblatt 87/18

(84) Benannte Vertragsstaaten: AT BE CH DE ES FR GB IT LI

(71) Anmelder: HOECHST AKTIENGESELLSCHAFT
Postfach 80 03 20
D-6230 Frankfurt am Main 80(DE)

(72) Erfinder: Hähnke, Manfred, Dr.
Behringstrasse 13
D-6233 Kelkheim (Taunus)(DE)

(72) Erfinder: Mischke, Peter, Dr.
Eichhornweg 2
D-6232 Bad Soden am Taunus(DE)

Der weitere Erfinder hat auf seine Nennung verzichtet

(54) **Mischungen und Präparationen wasserlöslicher Reaktivfarbstoffe.**

(57) Präprationen, die eine Mischung wasserlöslicher Reaktivfarbstoffe der Formel (I) und (II) im Verhältnis 1 : 10 bis 10 [: 1 enthalten oder im wesentlichen aus der genannten Mischung bestehen

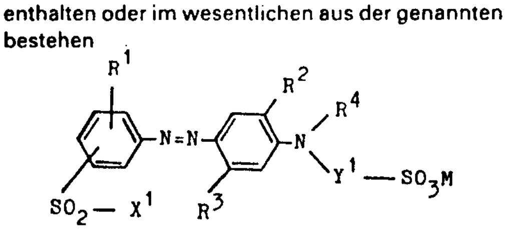

(I)

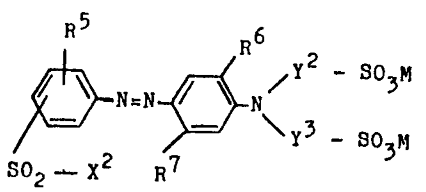

(II),

wobei in den Formeln

$R^1$ und $R_5$ Wasserstoff, Halogen, $C_1$-$C_4$-Alkyl, $C_1$-$C_4$-Alkoxy, Carboxy oder Sulfo,

$R^2$, $R^3$, $R^6$ und $R^7$ Wasserstoff, Halogen, $C_1$-$C_4$-Alkyl oder $C_1$-$C_4$-Alkoxy,

$R^4$ Wasserstoff oder $C_1$-$C_4$-Alkyl, das durch Hydroxy, Cyano oder Carboxy substituiert sein kann,

$X^1$ und $X^2$ Vinyl, β-Chlorethyl, β-Sulfatoethyl, β-Thiosulfatoethyl oder β-Phosphatoethyl sowie

$Y^1$, $Y^2$ und $Y^3$ Ethylen, Ethylenoxy oder Methylethylenoxy bedeuten.

Die Farbstoffmischungen eignen sich zum Färben oder Bedrucken von Materialien, die aus Zellulosefasern bestehen oder sie enthalten, und zeichnen sich durch gute Wasserlöslichkeit und gute Affinität zur Zellulosefaser aus.

EP 0 219 741 A2

Croydon Printing Company Ltd

Mischungen und Präparationen wasserlöslicher Reaktivfarbstoffe

Die Erfindung betrifft Mischungen wasserlöslicher Reaktivfarbstoffe zum Färben und Bedrucken von Materialien, die Zellulosefasern enthalten.

Für die praktische Durchführung der Färbung und des Drucks von Zellulosefasern mit Reaktivfarbstoffen sind neben anderen folgende Farbstoffeigenschaften unverzichtbar: Eine ausreichende Wasserlöslichkeit sowie eine ausreichende Affinität zum Substrat. Diese Forderungen gelten für alle Anwendungsverfahren wie z.B. für das Ausziehfärbeverfahren, für die verschiedenen Klotzfärbeverfahren und für den Druck.

In der DE-2 653 478 sowie in der EP-51 808 werden Monoazofarbstoffe beschrieben, die außer den gegebenenfalls wasserlöslich machenden Reaktivgruppen noch 1 bis 2 Sulfatogruppen bzw. 1 bis 3 Sulfogruppen enthalten.

Diese Farbstoffe weisen im Fall niedriger Sulfato/Sulfo-Gruppen-Anzahl einerseits eine für die Ausziehfärbung unzureichende Löslichkeit in der alkalischen, salzhaltigen Färbeflotte, andererseits aber eine hohe Affinität zum Fasersubstrat auf. Umgekehrt weisen diese Farbstoffe im Fall hoher Sulfato/Sulfo-Gruppen-Anzahl einerseits eine für die Ausziehfärbung unzureichende Affinität zum Fasersubstrat, andererseits aber eine hohe Löslichkeit auf. Bei einem Großteil dieser Farbstoffe gelingt es nicht, praxisgemäße Löslichkeit in der alkalischen, salzhaltigen Färbeflotte und praxisgemäße Affinität zu vereinen.

Es ist bekannt und in der täglichen Färberei-Praxis üblich, verschiedene Reaktivfarbstoffe in Mischung miteinander einzusetzen. Hierdurch erzielt man nach dem bisherigen Stand des Wissens coloristische Eigenschaften, z.B. eine Wasserlöslichkeit oder eine Affinität zum Substrat, welche etwa im Mittel zwischen den Eigenschaften

der Einzelkomponenten liegen. Es ist jedoch beispielsweise wünschenswert, Farbstoffe einsetzen zu können, die sowohl hohe Wasserlöslichkeit als auch hohe Affinität zur Faser aufweisen.

Es wurde nun gefunden, daß man mit Mischungen bestimmter Farbstoffe ein coloristisches Verhalten erzielt, welches überraschenderweise besser ist, als von den Einzelkomponenten her zu erwarten ist.

Gegenstand der Erfindung sind Mischungen, einschließlich Färbepräparationen, wasserlöslicher Reaktivfarbstoffe, die durch einen Gehalt an einem Farbstoff oder mehreren Farbstoffen der allgemeinen Formel I (Typ I) und an einem Farbstoff oder mehreren Farbstoffen der allgemeinen Formel II (Typ II) im Gewichtsverhältnis von 1 : 10 bis 10 : 1 der Farbstofftypen zueinander gekennzeichnet sind:

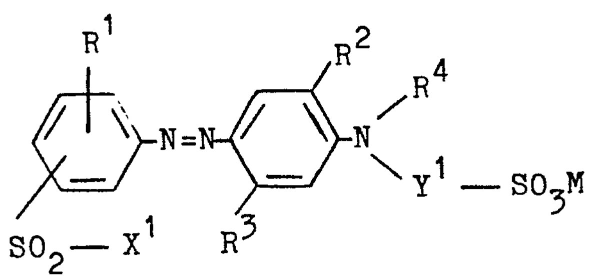

(I)

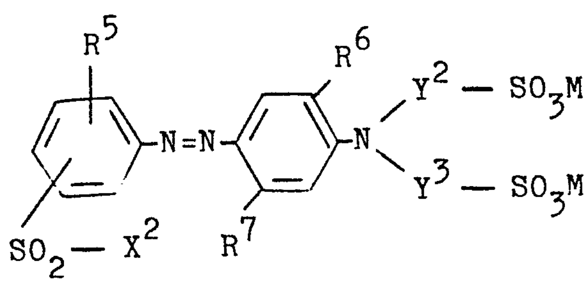

(II),

wobei in den Formeln

$R^1$ und $R^5$ unabhängig voneinander jeweils einen Rest Wasserstoff, Halogen, wie Fluor, Chlor oder Brom, Alkyl mit 1 bis 4 C-Atomen, Alkoxy mit 1 bis 4 C-Atomen oder einen Rest der Formel -COOM oder $-SO_3M$, wobei jeweils M die im folgenden beschriebene Bedeutung hat,

M ein Wasserstoffatom oder das Äquivalent eines ein-, zwei- oder dreiwertigen Metalls, insbesondere Alkali- oder Erdalkalimetalls,
$R^2$, $R^3$, $R^6$ und $R^7$ unabhängig voneinander jeweils einen Rest Wasserstoff, Halogen, wie Fluor, Chlor oder Brom, Alkyl mit 1 bis 4 C-Atomen oder Alkoxy mit 1 bis 4 C-Atomen,
$R^4$ den Rest Wasserstoff oder eine $C_1$-$C_4$-Alkylgruppe, die durch einen oder mehrere Reste der Formel -OH, -CN oder -COOM, wobei M die obengenannte Bedeutung hat, substituiert sein kann,
$X^1$ und $X^2$ unabhängig voneinander jeweils eine Gruppe der Formel $-CH=CH_2$, $-CH_2CH_2Cl$, $-CH_2CH_2OSO_3M$, $-CH_2CH_2-S-SO_3M$ oder $-CH_2CH_2OPO_3M_2$, wobei jeweils M die obengenannte Bedeutung hat, und
$Y^1$, $Y^2$ und $Y^3$ unabhängig voneinander jeweils eine Gruppe der Formel $-CH_2CH_2-$, $-CH_2CH_2O-$, $-CH(CH_3)CH_2O-$ oder $-CH_2CH(CH_3)O-$ bedeuten.

Von besonderem Interesse sind erfindungsgemäße Farbstoffmischungen gekennzeichnet durch Reaktivfarbstoffe der obengenannten Formel (I) und (II), in denen

$R^1$ und $R^5$ unabhängig voneinander jeweils einen Rest Wasserstoff, Chlor, Brom, Methyl, Methoxy, -COOM oder $-SO_3M$, wobei jeweils M die im folgenden beschriebene Bedeutung hat,
M jeweils ein Wasserstoff-, Lithium-, Natrium- oder Kaliumatom,
$R^2$, $R^3$, $R^6$ und $R^7$ unabhängig voneinander jeweils einen Rest Wasserstoff, Chlor, Methyl oder Methoxy,
$R^4$ den Rest Wasserstoff oder eine $C_1$-$C_4$-Alkylgruppe, die durch einen Rest -OH, -CN oder -COOM, wobei M die obengenannte Bedeutung hat, substituiert sein kann,
$X^1$ und $X^2$ unabhängig voneinander jeweils eine Gruppe der Formel $-CH=CH_2$ oder $-CH_2CH_2OSO_3M$, wobei M die obengenannte Bedeutung hat, und

$Y^1$, $Y^2$ und $Y^3$ unabhängig voneinander jeweils eine Gruppe der Formel $-CH_2-CH_2-$, $-CH_2CH_2O-$ oder $-CH_2CH(CH_3)O-$ bedeuten.

Bevorzugt sind erfindungsgemäße Farbstoffmischungen mit Reaktivfarbstoffen der Formeln (I) und (II), in denen $X^1$ und $X^2$ jeweils eine Gruppe der Formel $-CH_2CH_2OSO_3M$, M ein Wasserstoff-, Natrium- oder Kaliumatom, sowie $Y^2$ und $Y^3$ gleiche Reste bedeuten.

Bevorzugt sind erfindungsgemäße Farbstoffmischungen mit Reaktivfarbstoffen der Formel I und/oder der Formel II, die in Orthostellung zur Azogruppe ein Chlor- oder Bromatom besitzen.

Weiterhin bevorzugt sind erfindungsgemäße Farbstoffmischungen mit einem Gehalt an einem Farbstoff oder mehreren Farbstoffen der Formel I (Typ I) und einem Gehalt an einem Farbstoff oder mehreren Farbstoffen der Formel II (Typ II) im Gewichtsverhältnis von 3 : 7 bis 7 : 3 der Farbstofftypen zueinander.

Die erfindungsgemäßen Farbstoffmischungen können auch einen Farbstoff oder mehrere Farbstoffe mit von Formel I oder II abweichender Konstitution enthalten. Bevorzugt sind erfindungsgemäße Farbstoff-Mischungen, die nur aus Farbstoffen der Formel I und II bestehen.

Die erfindungsgemäßen Farbstoffmischungen können in Mischung mit Hilfsmitteln zum Färben oder Drucken, wie sie für die Anwendung von Reaktivfarbstoffen üblich sind, vorliegen. Hilfsmittel sind beispielsweise Wasser oder hydrotrope Mittel wie Glycerin, Glykol- oder Polyglykolether oder Harnstoff, Oxidationsmittel gegen die Reduktionswirkung der Zellulose, wie 2,4-Dinitrobenzolsulfonsäure oder 3-Nitrobenzolsulfonsäure, Salze zur Erhöhung

der Fixierausbeute, wie Natriumchlorid oder Natriumsulfat, oder Netzmittel, organische Lösemittel oder Fixiermittel, wie Natronlauge, Soda, Natriumhydrogencarbonat, Wasserglas, Trinatriumphosphat.

Die erfindungsgemäßen Farbstoffmischungen (Präparationen) können beispielsweise in Form eines Pulvers, Granulats, einer Flüssigeinstellung, Druckpaste oder eines Färbebads vorliegen.

Gegenstand der Erfindung ist auch das Verfahren zur Herstellung der obengenannten Farbstoffmischungen durch Herstellen einer Lösung oder durch gemeinsame Synthese der Farbstoffe mit anschließender Sprühtrocknung oder Ausfällung, wodurch die Farbstoffe in inniger Mischung als Pulver oder Granulat erhalten werden können.

Nachträgliches Mischen der pulverförmigen Einzelkomponenten ist ebenfalls möglich. Die Pulver können in Analogie zu bekannten Verfahren zu Druckpasten und Flüssigeinstellungen verarbeitet werden.

Die Einzelfarbstoffe können auch erst bei der gemeinsamen Anwendung zusammengegeben werden, beispielsweise vorteilhaft bei der Färbung mit Färbebädern nach dem Ausziehverfahren.

Die erfindungsgemäß in den Mischungen enthaltenen faserreaktiven Farbstoffe I und II sind aus der DE-C3-2653478 und aus der EP-B1-0051808 bekannt bzw. können analog den darin beschriebenen Verfahrensweisen hergestellt werden.

Gegenstand der Erfindung ist auch die Verwendung der erfindungsgemäßen Farbstoffmischungen zum Färben sowie Bedrucken von Zellulosefasermaterialien bzw. Mischungen von Zellulosefasern mit anderen Fasern.

Als Zellulosefasermaterialien sind Baumwolle oder regenerierte Zellulose, wie Viskoseseide, sowie Leinen, Hanf und Jute bevorzugt. Zellulosefasermaterialien können mit den erfindungsgemäßen Farbstoffmischungen beispielsweise in diskontinuierlichen halbkontinuierlichen oder kontinuierlichen Verfahren gefärbt werden.

Bevorzugt ist das mit ausgezeichneter Farbausbeute verlaufende Ausziehverfahren im alkalischen Medium unter Verwendung verschiedenster Alkalizusätze, wie sie für die Färbung von Zellulosefasern mit Reaktivfarbstoffen vom Vinylsulfontyp üblich sind, beispielsweise Natronlauge, Soda oder Natriumbicarbonat sowie weiterer Färbereihilfsmittel, wie Natriumchlorid oder Natriumsulfat.
Sehr gute Farbausbeute wird auch in Analogie zu den bekannten Klotzverfahren erzielt, wobei eine erfindungsgemäße Farbstoffmischung mittels Alkali durch Verweilen bei Raumtemperatur, durch Dämpfen oder mit Trockenhitze fixiert werden kann.

Das Bedrucken von Cellulosefasermaterialien unter Verwendung von Druckpasten mit den erfindungsgemäßen Farbstoffmischungen kann nach den üblichen einphasigen und zweiphasigen Druckverfahren erfolgen, wobei beispielsweise im einphasigen Druckverfahren die Druckpaste ein säurebindendes Mittel, wie Natriumbicarbonat, Natriumcarbonat oder Natriumtrichloracetat, enthält und die Fixierung der Farbstoffe auf dem bedruckten Fasermaterial durch Dämpfen, beispielsweise bei 100 - 103°C, durchgeführt wird, oder wobei im zweiphasigen Verfahren das Fasermaterial zunächst mti einer neutralen oder schwach sauer eingestellten Druckpaste bedruckt wird und die Fixierung der Farbstoffe auf dem bedruckten Material beispielsweise durch Hindurchführen des bedruckten Materials durch ein heißes elektrolythaltiges alkalisches Bad erfolgt oder indem man das bedruckte Material zunächst mit einer alkalischen elektrolythaltigen Klotzflotte überklotzt und anschließend dämpft

0219741

oder einer Trockenhitzebehandlung aussetzt. Man erhält auf diese Weise Drucke mit gutem Stand der Konturen und einem klaren Weißfond.

Mit den erfindungsgemäßen Farbstoffmischungen lassen sich auch Mischungen von Zellulosefasern mit anderen natürlichen oder synthetischen Fasern, beispielsweise Mischungen von Zellulosefasern mit Synthesefasern, wie Polyester- oder Polyacrylfasern, färben. Die Färbung erfolgt dabei in der Regel zweistufig, wobei der Zelluloseanteil der Fasermischung mit einer erfindungsgemäßen Farbstoffmischung und der Synthesefaseranteil mit einem dafür geeigneten Farbstoff, beispielsweise einem Dispersionsfarbstoff, gefärbt wird. Bei bestimmten Farbstoffen und Fasermischungen kann das Färbeverfahren auch einstufig erfolgen.

Die erfindungsgemäßen Farbstoffmischungen zeichnen sich durch eine sehr gute Wasserlöslichkeit aus und besitzen eine hohe Affinität zum Fasersubstrat, so daß man hohe Farbtiefen und Farbausbeuten sowie eine hohe Färbeegalität erzielt. Außerdem zeichnen sich die erfindungsgemäßen Farbstoffmischungen durch ein rasches und homogenes Fixieren der Mischungskomponenten des obengenannten Typs I und II auf dem Fasersubstrat aus.

Die mit den erfindungsgemäßen Farbstoffmischungen erhältlichen Färbungen oder Drucke auf Zellulosefasermaterialien besitzen beachtliche Echtheiten, von denen insbesondere die wichtigen Fabrikations- und Gebrauchsechtheiten hervorzuheben sind, wie Lichtechtheit, Waschechtheit bei 60°C und 95°C, saure und alkalische Walkechtheit, Wasserechtheit, Seewasserechtheit, saure Überfärbeechtheit, alkalische und saure Schweißechtheit sowie die Plissier-, Bügel- und Reibechtheiten.

Die in den folgenden Beispielen angegebenen Teile sind Gewichtsteile. Die in den nachfolgenden Beispielen formelmäßig in Form der freien Säure beschriebenen Farbstoffe

wurden als Natriumsalze und in Form eines elektrolytsalzhaltigen Pulvers mit einem Farbstoffgehalt von 40 Gew.-% eingesetzt.

## Beispiel 1

100 Teile Baumwollgarn werden bei 20°C in ein Färbebad aus 1000 Teilen Wasser, 50 Teilen Kochsalz, 5 Teilen kalzinierter Soda, 2 Teilen 33 %iger Natronlauge sowie 0,5 Teilen eines Farbstoffes der Formel (1)

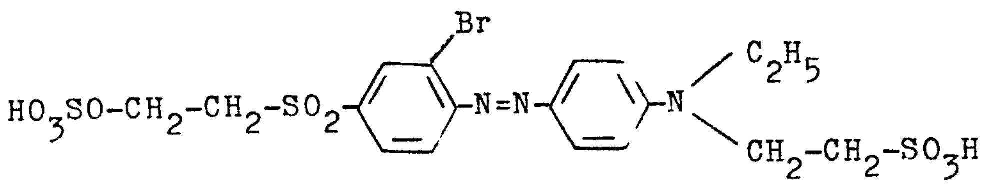

(1)

und 0,5 Teilen eines Farbstoffs der Formel (2)

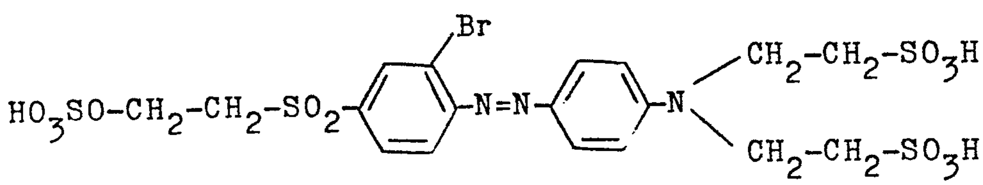

(2)

gegeben. Unter guter Bewegung des Garns wird innerhalb von 30 min auf 40°C erwärmt und 90 min bei dieser Temperatur gefärbt. Anschließend wird das Färbegut mit kaltem und warmem Wasser gespült, mit verdünnter Essigsäure angesäuert, in kochendem Wasser geseift, mit warmem und kaltem Wasser gespült und getrocknet. Man erhält eine farbtiefe, egale Orange-Färbung mit guten Echtheitseigenschaften.

## Beispiel 2 (Vergleichsbeispiel)

Arbeitet man wie in Beispiel 1 beschrieben, allerdings unter Verwendung der doppelten Menge des erstgenannten Farbstoffs und ohne den zweitgenannten Farbstoff, so erhält man eine trübe, rotstichtige Orange-Färbung mit sehr schlechter Egalität und voll von dunklen Stippen und Flecken.

Beispiel 3 (Vergleichsbeispiel)

Arbeitet man wie in Beispiel 1 beschrieben, allerdings unter Verwendung der doppelten Menge des zweitgenannten Farbstoffs und ohne den erstgenannten Farbstoff, so erhält man nur eine farbschwache, gelbstichige Orange-Färbung.

Beispiel 4

150 Teile einer Fasermischung aus Baumwolle und Polyester im Gewichtsverhältnis 1 : 1 werden analog dem Verfahren aus Beispiel 1 gefärbt. Man erhält eine Färbung mit gleichmäßigem Orange-Farbton auf dem Baumwoll-Anteil. Durch separate Überfärbung des Polyester-Anteils mit einem handelsüblichen Dispersionsfarbstoff C.I. Disperse Orange 13 (C.I. No. 26080) nach dem Hochtemperatur-Färbeverfahren erhält man eine Uni-Färbung in tiefem Orange.

Beispiel 5

100 Teile Regneratzellulosefasergarn werden bei 20°C in ein Färbbad aus 1000 Teilen Wasser, 50 Teilen Kochsalz, 5 Teilen kalzinierter Soda, 1 Teil 33 %iger Natronlauge sowie 0,5 Teilen Farbstoff der Formel (1) aus Beispiel 1 und 0,5 Teilen Farbstoff der Formel (2) aus Beispiel 1 gegeben.

Unter guter Bewegung des Garns wird innerhalb von 30 min auf 60°C erwärmt und 90 min bei dieser Temperatur gefärbt. Anschließend wird das Färbegut mit kaltem und warmem Wasser gespült, mit verdünnter Essigsäure angesäuert, in kochendem Wasser geseift, mit warmem und kaltem Wasser gespült und getrocknet. Man erhält eine farbtiefe, gleichmäßige Orange-Färbung.

Beispiel 6

100 Teile Baumwollgarn werden analog Beispiel 1 unter Verwendung von 0,5 Teilen Farbstoff der Formel (1), 0,5 Teilen Farbstoff der Formel (2) und zusätzlich 0,5 Teilen eines handelsüblichen Farbstoffes C.I. Reactive Black 5 (C.I. No. 20505) gefärbt. Man erhält nach der Trocknung eine egale Braun-Färbung.

Beispiele 7 - 10

Arbeitet man wie in Beispiel 1 beschrieben, aber unter folgender Variation der Farbstoff-Einsatzmengen, so erhält man ebenfalls Färbungen ohne Stippen und Flecken:

| Beispiel Nr. | Teile Farbstoff der Formel (1) | Teile Farbstoff der Formel (2) | Farbton der Färbung |
|---|---|---|---|
| 7 | 0,01 | 0,09 | hellgelbstichig-orange |
| 8 | 0,3 | 0,03 | hellrotstichig-orange |
| 9 | 0,5 | 2,5 | gelbstichig-orange |
| 10 | 2,0 | 2,0 | rotstichig-orange |

Beispiel 11

Ein Baumwollgewebe wird bei Raumtemperatur mit einer Färbeflotte geklotzt (Flottenaufnahme 80 %), welche aus 1000 Teilen Wasser, 10 Teilen eines Farbstoffs der Formel (3)

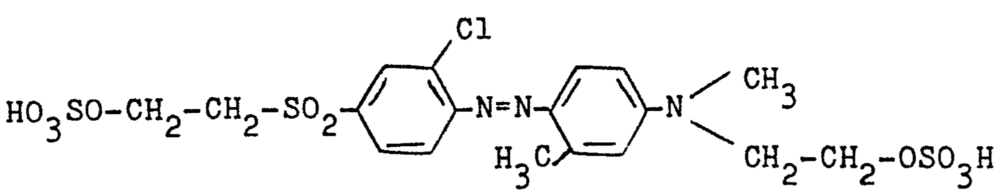

(3),

15 Teilen eines Farbstoffs der Formel (4)

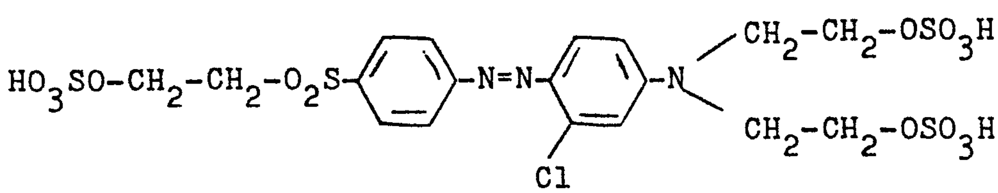

(4),

30 Teilen Natriumsulfat und 18 Teilen 33 %iger Natronlauge besteht. Nach dem Klotzvorgang wird das Gewebe sofort in eine Folie eingewickelt und über Nacht bei Raumtemperatur verweilen gelassen. Anschließend wird das Gewebe warm und kalt mit Wasser gespült, mit verdünnter Essigsäure angesäuert, in kochendem Wasser geseift, warm und kalt mit Wasser gespült und getrocknet. Man erhält eine gelbstichige Orange-Färbung.

Beispiel 12

Ein Baumwollgewebe wird im Filmdruckverfahren mit einer Druckpaste bedruckt, welche aus 8 Teilen eines Farbstoffs der Formel (5)

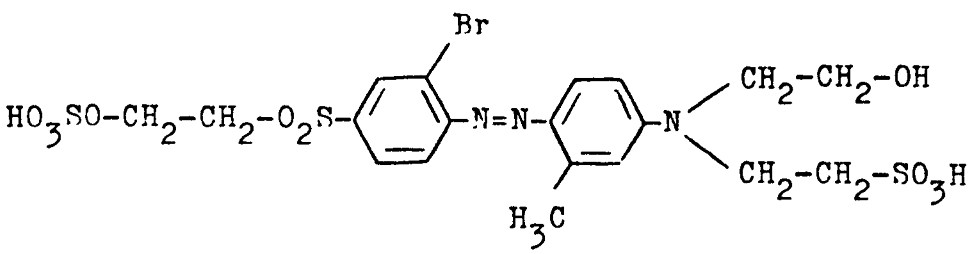

(5),

10 Teilen eines Farbstoffs der Formel (6)

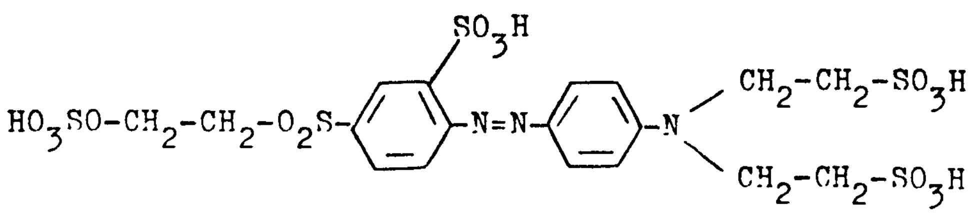

(6),

100 Teilen Harnstoff,
450 Teilen einer 4 %igen wäßrigen Na-Alginat-Verdickung
25 Teilen Natriumhydrogencarbonat
30 Teilen einer 33 %igen wäßrigen Lösung von 2,4-Dinitrobenzolsulfonsäure
345 Teilen Wasser

besteht. Es wird bei ca. 80°C getrocknet und anschließend 8 min lang bei 102°C gedämpft. Das Gewebe wird dann mit

0219741

kaltem und warmem Wasser gespült, mit verdünnter Essigsäure angesäuert, in kochendem Wasser geseift und nochmals warm und kalt mit Wasser gespült. Man erhält einen farbstarken Orange-Druck.

Beispiel 13

Eine 10 % wäßrige Lösung des Farbstoffs der Formel (1) aus Beispiel 1 wird mit einer 10 %igen wäßrigen Lösung des Farbstoffs der Formel (7)

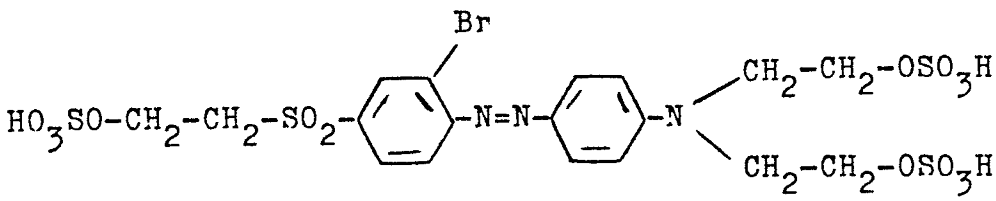

(7)

im Verhältnis 1 : 3 gemischt. Durch Sprühtrocknen der Lösung erhält man eine innige Mischung beider Farbstoffe in Pulverform. 2 Teile dieser Mischung werden zur Ausziehfärbung von Baumwolle analog dem Verfahren von Beispiel 1 eingesetzt. Man erhält eine egale Orange-Färbung.

Beispiel 14

Stellt man wie in Beispiel 13 beschrieben, eine gemischte Farbstofflösung her, gibt 10 g/l kristallisiertes Natriumacetat zu und stellt mit Essigsäure auf pH 4,5, so erhält man eine lagerstabile Flüssigeinstellung dieser Farbstoffe.

Beispiele 15 - 22

Arbeitet man wie in Beispiel 1 angegeben, allerdings unter Einsatz von Farbstoffmischungen aus folgenden Komponenten und Farbstoffmengen anstelle der in Beispiel 1 genannten, so erhält man gleichmäßige und farbstarke Orange-Färbungen:

| Nr. | Teile | Farbstoffkomponenten |
|---|---|---|
| 15 | 1 | Farbstoff der Formel (7) aus Beispiel 13 |
| | 0,5 | 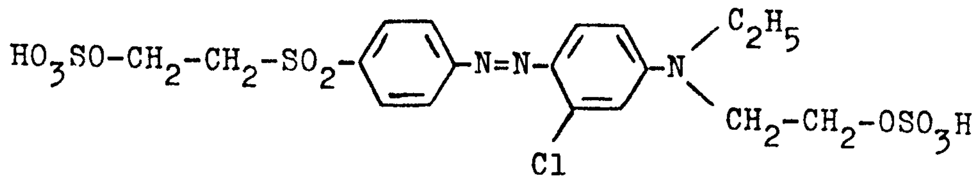 |
| | 0,5 | 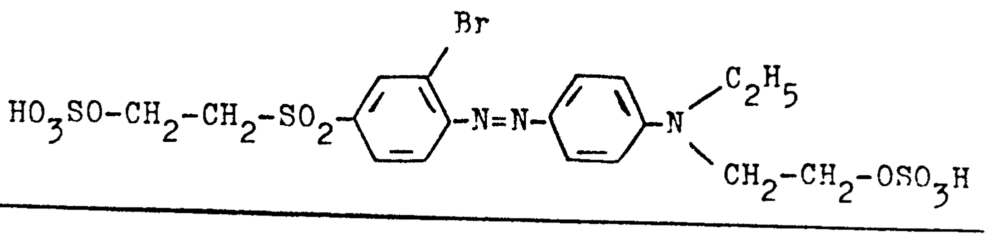 |
| 16 | 1 | Farbstoff der Formel (2) aus Beispiel 1 |
| | 1 | 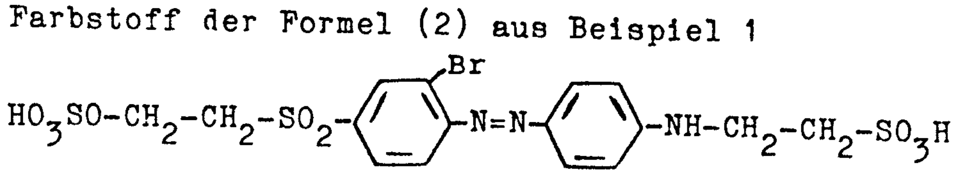 |
| | 0,5 | 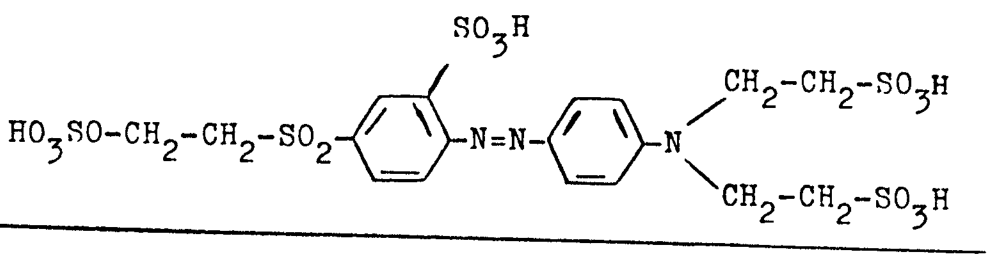 |
| 17 | 1 | Farbstoff der Formel (2) aus Beispiel 1 |
| | 0,5 | 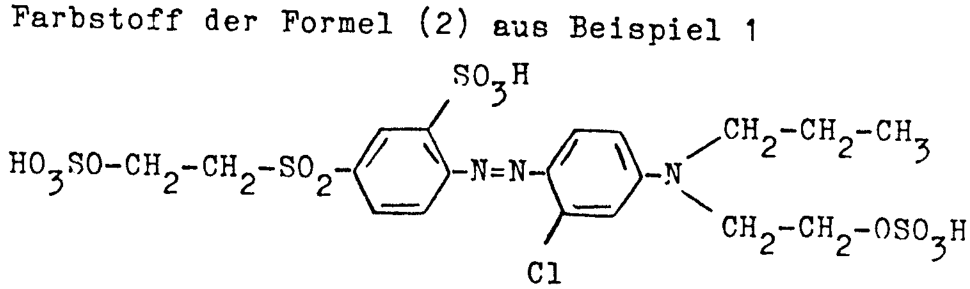 |
| | 0,5 | 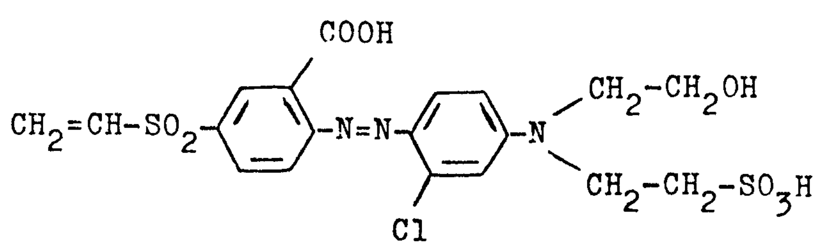 |

| Nr. | Teile | Farbstoffkomponenten |
|---|---|---|
| 18 | 1,2 | Farbstoff der Formel (2) aus Beispiel 1 |
| | 0,4 | 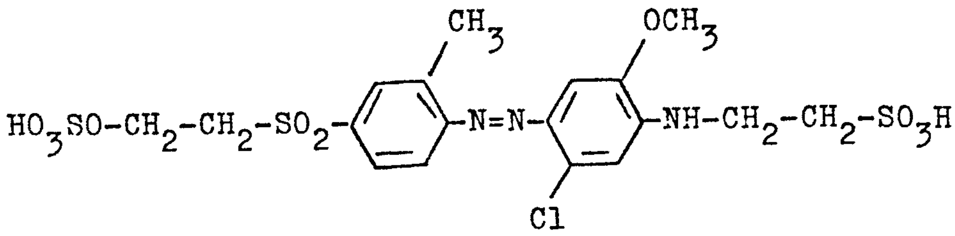 |
| | 0,4 | 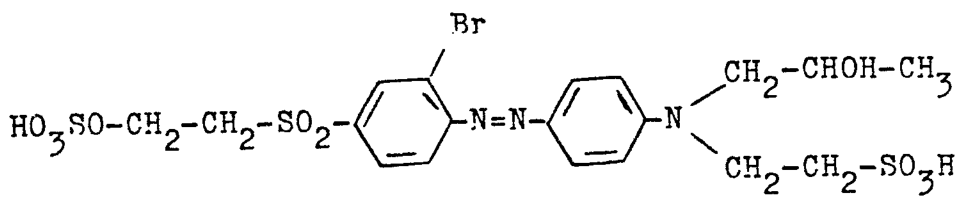 |
| 19 | 1,0 | 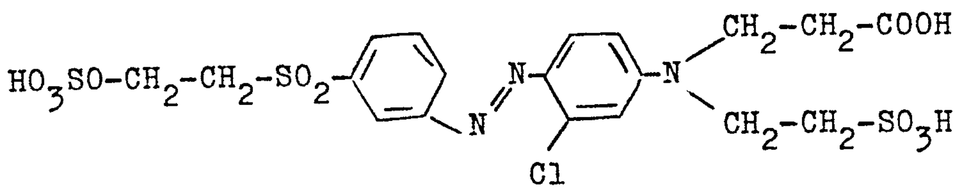 |
| | 1,0 | 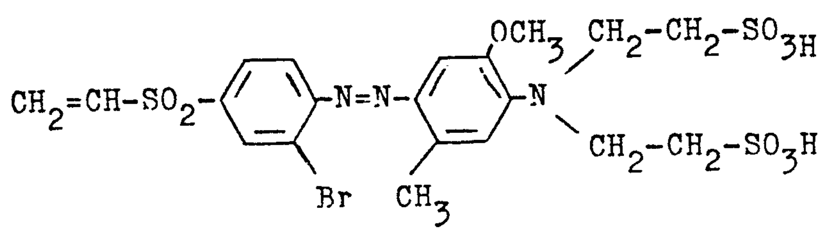 |
| 20 | 0,5 | 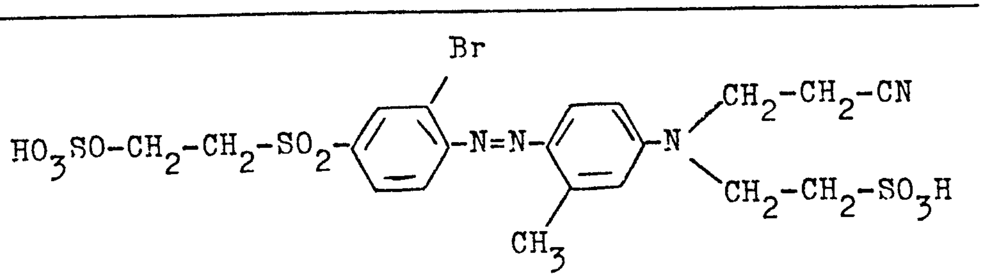 |
| | 0,5 | 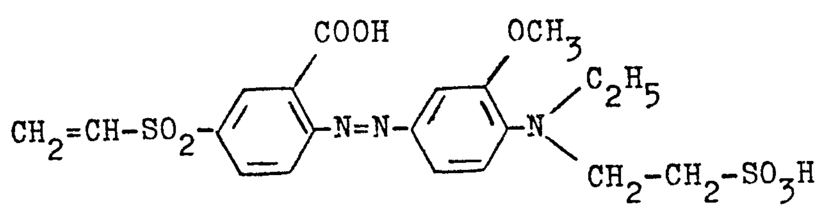 |

| | | |
|---|---|---|
| | 1,0 | 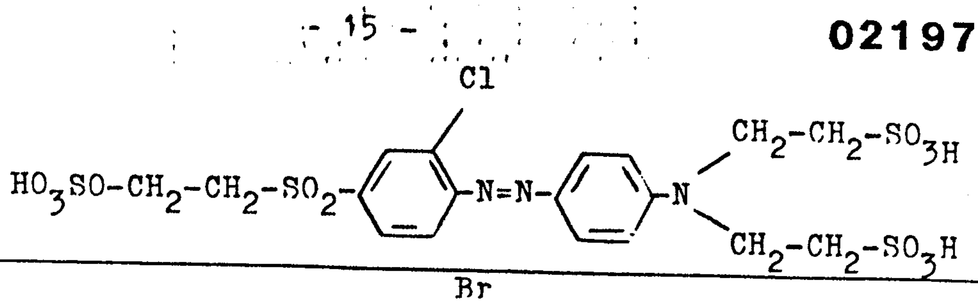 |
| 21 | 0,5 | 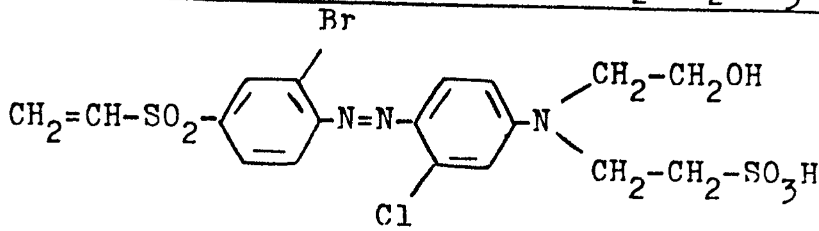 |
| | 1,5 | 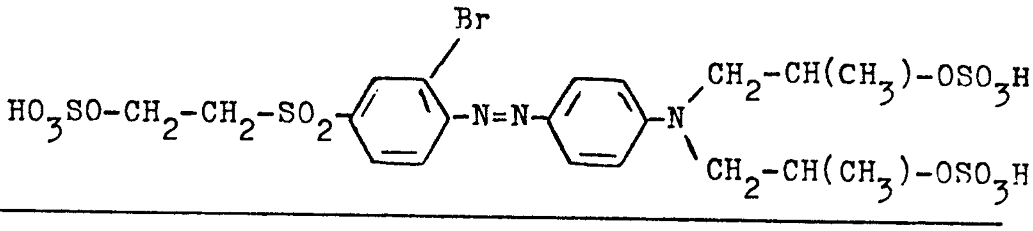 |
| 22 | 0,3 | 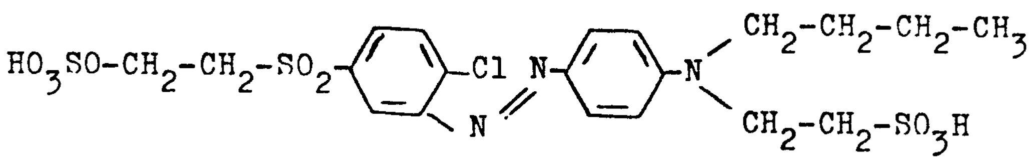 |
| | 0,2 | 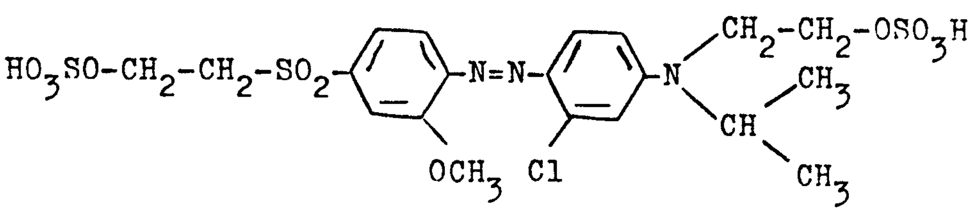 |
| | 1,5 | 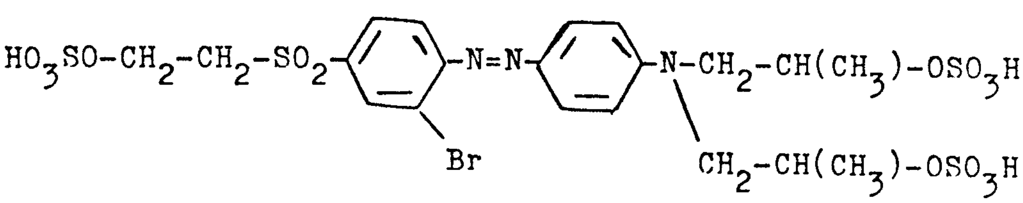 |

Patentansprüche:

1. Mischung wasserlöslicher Reaktivfarbstoffe, gekennzeichnet durch einen Gehalt an einem Farbstoff oder mehreren Farbstoffen der allgemeinen Formel (I) (Typ I) und an einem Farbstoff oder mehreren Farbstoffen der allgemeinen Formel (II) (Typ II) im Gewichtsverhältnis von 1 : 10 bis 10 : 1 der Farbstofftypen zueinander

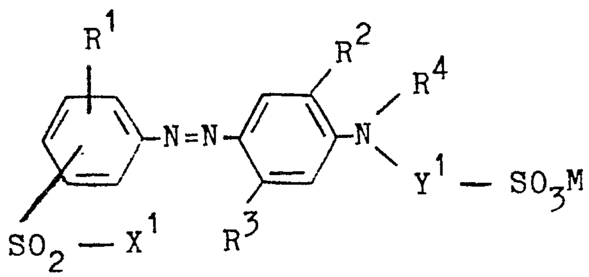

(I)

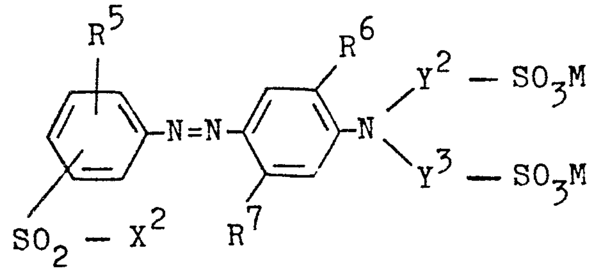

(II),

wobei in den Formeln (I) und (II)
$R^1$ und $R^5$ unabhängig voneinander jeweils einen Rest Wasserstoff, Halogen, wie Fluor, Chlor oder Brom, Alkyl mit 1 bis 4 C-Atomen, Alkoxy mit 1 bis 4 C-Atomen oder einen Rest der Formel -COOM oder $-SO_3M$, wobei jeweils M die im folgenden beschriebene Bedeutung hat,
M ein Wasserstoffatom oder das Äquivalent eines ein-, zwei- oder dreiwertigen Metalls,
$R^2$, $R^3$, $R^6$ und $R^7$ unabhängig voneinander jeweils einen Rest Wasserstoff, Halogen, wie Fluor, Chlor oder Brom, Alkyl mit 1 bis 4 C-Atomen oder Alkoxy mit 1 bis 4 C-Atomen,
$R^4$ den Rest Wasserstoff oder eine $C_1$-$C_4$-Alkylgruppe, die durch einen oder mehrere Reste der Formel -OH,

-CN oder -COOM, wobei M die obengenannte Bedeutung hat, substituiert sein kann, $X^1$ und $X^2$ unabhängig voneinander jeweils eine Gruppe der Formel $-CH{=}CH_2$, $-CH_2CH_2Cl$, $-CH_2CH_2OSO_3M$, $-CH_2CH_2-S-SO_3M$ oder $-CH_2CH_2OPO_3M_2$, wobei jeweils M die obengenannte Bedeutung hat, und $Y^1$, $Y^2$ und $Y^3$ unabhängig voneinander jeweils eine Gruppe der Formel $-CH_2CH_2-$, $-CH_2CH_2O-$, $-CH(CH_3)CH_2O-$ oder $-CH_2CH(CH_3)O-$ bedeuten.

2. Mischung nach Anspruch 1, gekennzeichnet durch Reaktivfarbstoffe der Formel (I) und (II), in denen $R^1$ und $R^5$ unabhängig voneinander jeweils einen Rest Wasserstoff, Chlor, Brom, Methyl, Methoxy, -COOM oder $-SO_3M$, wobei jeweils M die im folgenden beschriebene Bedeutung hat, M ein Wasserstoff-, Lithium-, Natrium- oder Kaliumatom, $R^2$, $R^3$, $R^6$ und $R^7$ unabhängig voneinander jeweils einen Rest Wasserstoff, Chlor, Methyl oder Methoxy, $R^4$ den Rest Wasserstoff oder eine $C_1$-$C_4$-Alkylgruppe, die durch den Rest -OH, -CN oder -COOM, wobei M die obengenannte Bedeutung hat, substituiert sein kann, $X^1$ und $X^2$ unabhängig voneinander jeweils eine Gruppe der Formel $-CH{=}CH_2$ oder $-CH_2CH_2-OSO_3M$, wobei M die obengenannte Bedeutung hat, und $Y^1$, $Y^2$ und $Y^3$ unabhängig voneinander jeweils eine Gruppe der Formel $-CH_2CH_2-$, $-CH_2CH_2O-$ oder $-CH_2CH(CH_3)O-$ bedeuten.

3. Mischung nach Anspruch 1 oder 2, gekennzeichnet durch Reaktivfarbstoffe der Formeln (I) und (II), in denen

$X^1$ und $X^2$ jeweils eine Gruppe der Formel $-CH_2CH_2OSO_3M$, M ein Wasserstoff-, Natrium- oder Kaliumatom sowie $Y^2$ und $Y^3$ gleiche Reste bedeuten.

4. Mischung nach einem der Ansprüche 1 bis 3, gekennzeichnet durch einen oder mehrere Reaktivfarbstoffe der Formeln (I) und/oder (II), in denen einer oder mehrere der Reste $R^1$, $R^5$, $R^3$ oder $R^7$ ein in Orthostellung zur Azogruppe stehendes Chlor- oder Bromatom ist.

5. Mischung nach einem der Ansprüche 1 bis 4, gekennzeichnet durch ein Gewichtsverhältnis von 3 : 7 bis 7 : 3 der Farbstofftypen I und II zueinander.

6. Mischung nach einem der Ansprüche 1 bis 5, dadurch gekennzeichnet, daß die Farbstoffmischung aus Reaktivfarbstoffen der Formel I und II besteht.

7. Mischung nach einem der Ansprüche 1 bis 5, dadurch gekennzeichnet, daß die Farbstoffmischung neben den Farbstoffen der Formeln (I) und (II) zusätzlich einen oder mehrere Reaktivfarbstoffe anderer Konstitution enthalten.

8. Mischung nach einem der Ansprüche 1 bis 7, dadurch gekennzeichnet, daß die Farbstoffmischung in Form einer Zubereitung mit Hilfsmitteln zum Färben oder Drucken vorliegt.

9. Farbstoffpräparation, dadurch gekennzeichnet, daß sie eine Mischung nach einem der Ansprüche 1 bis 8 enthält.

10. Farbstoffpräparation nach Anspruch 9 zum Färben oder Bedrucken von Materialien, die aus Zellulosefasern bestehen oder Zellulosefasern enthalten.

11. Verfahren zur Herstellung einer Mischung wasserlöslicher Reaktivfarbstoffe durch Mischen, gemeinsame Synthese, gemeinsame Ausfällung, gemeinsame Sprühtrocknung oder durch gemeinsames Verarbeiten zu einer wäßrigen Flüssigeinstellung oder Druckpaste der Farbstoffkomponenten, dadurch gekennzeichnet, daß

die Farbstoffkomponenten einen oder mehrere Reaktivfarbstoffe der Formel (I) gemäß Anspruch 1 und einen oder mehrere Reaktivfarbstoffe der Formel (II) gemäß Anspruch 1 im Gewichtsverhältnis von 1 : 10 bis 10 : 1 enthalten.

12. Verwendung der Mischungen nach einem oder mehreren der Ansprüche 1 bis 8 zum Färben von Materialien aus Zellulosefasern und aus deren Mischungen mit anderen Fasern.

13. Verwendung nach Anspruch 12, dadurch gekennzeichnet, daß nach dem Ausziehverfahren unter alkalischen Bedingungen gefärbt wird.

14. Verwendung der Mischungen nach einem der Ansprüche 1 bis 8 zum Bedrucken von Materialien aus Zellulosefasern und aus Mischungen von Zellulosefasern mit anderen Fasern.

Patentansprüche: (für Österreich und Spanien)

1. Färbepräparation wasserlöslicher Reaktivfarbstoffe, gekennzeichnet durch einen Gehalt an einem Farbstoff oder mehreren Farbstoffen der allgemeinen Formel (I) (Typ I) und an einem Farbstoff oder mehreren Farbstoffen der allgemeinen Formel (II) (Typ II) im Gewichtsverhältnis von 1 : 10 bis 10 : 1 der Farbstofftypen zueinander

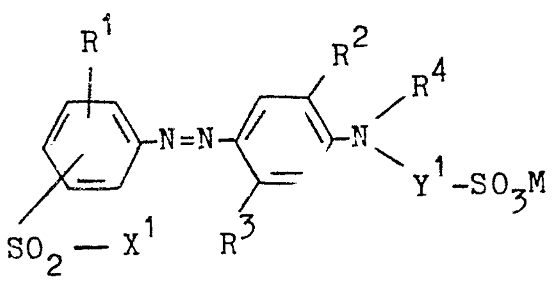

(I)

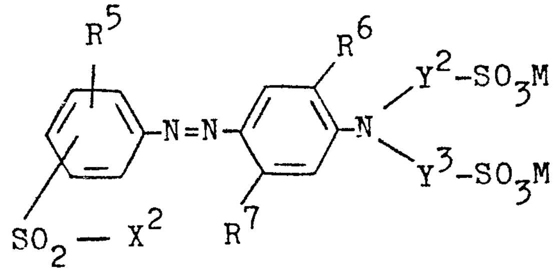

(II),

wobei in den Formeln (I) und (II)
$R^1$ und $R^5$ unabhängig voneinander jeweils einen Rest Wasserstoff, Halogen, Alkyl mit 1 bis 4 C-Atomen, Alkoxy mit 1 bis 4 C-Atomen oder einen Rest der Formel $-COOM$ oder $-SO_3M$, wobei jeweils M die im folgenden beschriebene Bedeutung hat,
M ein Wasserstoffatom oder das Äquivalent eines ein-, zwei- oder dreiwertigen Metalls,
$R^2$, $R^3$, $R^6$ und $R^7$ unabhängig voneinander jeweils einen Rest Wasserstoff, Halogen, wie Fluor, Chlor oder Brom, Alkyl mit 1 bis 4 C-Atomen oder Alkoxy mit 1 bis 4 C-Atomen,
$R^4$ den Rest Wasserstoff oder eine $C_1$-$C_4$-Alkylgruppe, die durch einen oder mehrere Reste der Formel -OH,

$-CN$ oder $-COOM$, wobei M die obengenannte Bedeutung hat, substituiert sein kann,
$X^1$ und $X^2$ unabhängig voneinander jeweils eine Gruppe der Formel $-CH=CH_2$, $-CH_2CH_2Cl$, $-CH_2CH_2OSO_3M$, $-CH_2CH_2-S-SO_3M$ oder $-CH_2CH_2OPO_3M_2$, wobei jeweils M die obengenannte Bedeutung hat, und
$Y^1$, $Y^2$ und $Y^3$ unabhänig voneinander jeweils eine Gruppe der Formel $-CH_2CH_2-$, $-CH_2CH_2O-$, $-CH(CH_3)CH_2O-$ oder $-CH_2CH(CH_3)O-$ bedeuten.

2. Färbepräparation nach Anspruch 1, gekennzeichnet durch Reaktivfarbstoffe der Formel (I) und (II), in denen $R^1$ und $R^5$ unabhängig voneinander jeweils einen Rest Wasserstoff, Chlor, Brom, Methyl, Methoxy, $-COOM$ oder $-SO_3M$, wobei jeweils M die im folgenden beschriebene Bedeutung hat,
M ein Wasserstoff-, Lithium-, Natrium- oder Kaliumatom,
$R^2$, $R^3$, $R^6$ und $R^7$ unabhängig voneinander jeweils einen Rest Wasserstoff, Chlor, Methyl oder Methoxy,
$R^4$ den Rest Wasserstoff oder eine $C_1$-$C_4$-Alkylgruppe, die durch den Rest $-OH$, $-CN$ oder $-COOM$, wobei M die obengenannte Bedeutung hat, substituiert sein kann,
$X^1$ und $X^2$ unabhängig voneinander jeweils eine Gruppe der Formel $-CH=CH_2$ oder $-CH_2CH_2-OSO_3M$, wobei M die obengenannte Bedeutung hat, und
$Y^1$, $Y^2$ und $Y^3$ unabhängig voneinander jeweils eine Gruppe der Formel $-CH_2CH_2-$, $-CH_2CH_2O-$ oder $-CH_2CH(CH_3)O-$ bedeuten.

3. Färbepräparation nach Anspruch 1 oder 2, gekennzeichnet durch Reaktivfarbstoffe der Formeln (I) und (II), in denen
$X^1$ und $X^2$ jeweils eine Gruppe der Formel $-CH_2CH_2OSO_3M$,
M ein Wasserstoff-, Natrium- oder Kaliumatom sowie
$Y^2$ und $Y^3$ gleiche Reste bedeuten.

4. Präparation nach einem der Ansprüche 1 bis 3, gekennzeichnet durch einen oder mehrere Reaktivfarbstoffe der Formeln (I) und/oder (II), in denen einer oder mehrere der Reste $R^1$, $R^5$, $R^3$ oder $R^7$ ein in Orthostellung zur Azogruppe stehendes Chlor- oder Bromatom ist.

5. Präparation nach einem der Ansprüche 1 bis 4, gekennzeichnet durch ein Gewichtsverhältnis von 3 : 7 bis 7 : 3 der Farbstofftypen I und II zueinander.

6. Präparation nach einem der Ansprüche 1 bis 5, dadurch gekennzeichnet, daß die enthaltenen Farbstoffe ausschließlich Reaktivfarbstoffe der Formel I und II sind.

7. Präparation nach einem der Ansprüche 1 bis 5, dadurch gekennzeichnet, daß neben den Farbstoffen der Formeln (I) und (II) zusätzlich ein oder mehrere Reaktivfarbstoffe anderer Konstitution enthalten sind.

8. Präparation nach einem der Ansprüche 1 bis 7, dadurch gekennzeichnet, daß die neben den Reaktivfarbstoffen zusätzlichen Hilfsmittel zum Färben oder Drucken enthalten sind.

9. Präparation nach einem der Ansprüche 1 bis 8 zum Färben oder Bedrucken von Materialien, die aus Zellulosefasern bestehen oder Zellulosefasern enthalten.

10. Verfahren zur Herstellung einer Farbstoffpräparation wasserlöslicher Reaktivfarbstoffe durch Mischen, gemeinsame Synthese, gemeinsame Ausfällung, gemeinsame Sprühtrocknung oder durch gemeinsames Verarbeiten zu einer wäßrigen Flüssigeinstellung oder Druckpaste der

Farbstoffkomponenten, dadurch gekennzeichnet, daß die Farbstoffkomponenten einen oder mehrere Reaktivfarbstoffe der Formel (I) gemäß Anspruch 1 und einen oder mehrere Reaktivfarbstoffe der Formel (II) gemäß Anspruch 1 im Gewichtsverhältnis von 1 : 10 bis 10 : 1 enthalten.

11. Verwendung einer Farbstoffpräparation nach einem oder mehreren der Ansprüche 1 bis 8 zum Färben von Materialien aus Zellulosefasern und aus deren Mischungen mit anderen Fasern.

12. Verwendung nach Anspruch 11, dadurch gekennzeichnet, daß nach dem Ausziehverfahren unter alkalischen Bedingungen gefärbt wird.

13. Verwendung einer Farbstoffpräparation nach einem der Ansprüche 1 bis 8 zum Bedrucken von Materialien aus Zellulosefasern und aus Mischungen von Zellulosefasern mit anderen Fasern.